# EUROPÄISCHE PATENTSCHRIFT

(11) **EP 3 474 663 B1**
(45) Veröffentlichungstag und Bekanntmachung des Hinweises auf die Patenterteilung: **06.08.2025**
(21) Anmeldenummer: 17731180.0
(22) Anmeldetag: 23.06.2017
(51) Int. Cl.: A01M 7/00, A01M 21/04, G09B 29/00, A01B 79/00, A01N 25/00

(54) **VERFAHREN ZUR BEKÄMPFUNG VON SCHADORGANISMEN**
METHOD FOR COMBATING PESTS
PROCÉDÉ DE LUTTE CONTRE LES ORGANISMES NUISIBLES

(30) Priorität: 28.06.2016 EP 16176650; 24.08.2016 EP 16185502
(43) Veröffentlichungstag der Anmeldung: 01.05.2019
(73) Patentinhaber: BASF SE, 67056 Ludwigshafen am Rhein (DE)
(72) Erfinder: HOFFMANN, Holger, 42781 Haan (DE); PETERS, Ole, 40217 Düsseldorf (DE); GRÜNEBERG, Eleen, 40223 Düsseldorf (DE); JOHNEN, Andreas, 48167 Münster (DE); GIRG, Andree-Georg, 53177 Bonn (DE)
(74) Vertreter: BASF IP Association
(86) Internationale Anmeldenummer: PCT/EP2017/065536
(87) Internationale Veröffentlichungsnummer: WO 2018/001893

(56) Entgegenhaltungen:
- DE-A1- 4 329 343
- R. GERHARDS ET AL: "Site Specific Weed Control in Winter Wheat", JOURNAL OF AGRONOMY AND CROP SCIENCE., vol. 178, no. 4, 1 January 1997 (1997-01-01), DE, pages 219 - 225, XP055299596, ISSN: 0931-2250, DOI: 10.1111/j.1439-037X.1997.tb00494.x
- MARTIN M WILLIAMS ET AL: "Two-Year Weed Seedling Population Responses to a Post-Emergent Method of Site-Specific Weed Management", PRECISION AGRICULTURE, KLUWER ACADEMIC PUBLISHERS, BO, vol. 2, no. 3, 1 November 2000 (2000-11-01), pages 247 - 263, XP019214606, ISSN: 1573-1618, DOI: 10.1023/A:1011886722418
- CHRISTIAN TIMMERMANN: "Teilflächenspezifische Unkrautkontrolle im präzisen Pflanzenbau unter Berücksichtigung von Ertragsdaten und Bodenparametern", DISSERTATION, 17 July 2001 (2001-07-17), Universität Bonn, pages 1 - 90, XP055299410, Retrieved from the Internet <URL:http://hss.ulb.uni-bonn.de/2001/0070/0070.pdf> [retrieved on 20160901]
- . ET AL: "Kamera-gesteuerte Unkrautkontrolle in Echtzeit", 21 December 2004 (2004-12-21), Osnabrück, Deutschland, pages 1 - 2, XP055299407, Retrieved from the Internet <URL:https://www.dbu.de/PDF-Files/A-14836.pdf> [retrieved on 20160901]
- MARTINA KOLLER ET AL: "Site-specific herbicide applications based on weed maps provide effective control", CALIFORNIA AGRICULTURE, 1 July 2005 (2005-07-01), pages 182 - 187, XP055299577, Retrieved from the Internet <URL:https://ucanr.edu/repositoryfiles/ca5903p182-69222.pdf> [retrieved on 20160902]
- MONTSERRAT JURADO-EXPÓSITO ET AL: "Multi-species weed spatial variability and site-specific management maps in cultivated sunflower", WEED SCIENCE., vol. 51, no. 3, 1 May 2003 (2003-05-01), US, pages 319 - 328, XP055299672, ISSN: 0043-1745, DOI: 10.1614/0043-1745(2003)051[0319:MWSVAS]2.0.CO;2
- M CARRARA ET AL: "Spatially Variable Rate Herbicide Application on Durum Wheat in Sicily", BIOSYSTEMS ENGINEERING, vol. 87, no. 4, 1 April 2004 (2004-04-01), UK, pages 387 - 392, XP055299598, ISSN: 1537-5110, DOI: 10.1016/j.biosystemseng.2004.01.004
- HENNING NORDMEYER: "Patchy weed distribution and site-specific weed control in winter cereals", PRECISION AGRICULTURE, KLUWER ACADEMIC PUBLISHERS, BO, vol. 7, no. 3, 31 August 2006 (2006-08-31), pages 219 - 231, XP019437304, ISSN: 1573-1618, DOI: 10.1007/S11119-006-9015-8
- MARTIN WEIS ET AL: "Qualitative und quantitative Messung der Verunkrautung in Kulturpflanzenbeständen mittels Bildanalyse (Qualitative and quantitative measurement of weed distribution in crops using image processing)", BORNIMER AGRARTECHNISCHE BERICHTE, 1 May 2008 (2008-05-01), pages 67 - 74, XP055299413
- J. CEPL ET AL: "Weed Mapping-A Way to Reduce Herbicide Doses", POTATO RESEARCH., vol. 53, no. 4, 1 December 2010 (2010-12-01), NL, pages 359 - 371, XP055299534, ISSN: 0014-3065, DOI: 10.1007/s11540-010-9173-y
- P HAMOUZ ET AL: "Impact of site-specific weed management on herbicide savings and winter wheat yield", PLANT SOIL ENVIRON., 1 March 2013 (2013-03-01), pages 101 - 107, XP055299585, Retrieved from the Internet <URL:http://www.agriculturejournals.cz/publicFiles/82944.pdf> [retrieved on 20160902]
- K-H DAMMER ET AL: "Variable-rate fungicide spraying in real time by combining a plant cover sensor and a decision support system", PRECISION AGRICULTURE, KLUWER ACADEMIC PUBLISHERS, BO, vol. 10, no. 5, 19 November 2008 (2008-11-19), pages 431 - 442, XP019733156, ISSN: 1573-1618
- MCKINION J M ET AL: "Spatially variable insecticide applications for early season control of cotton insect pests", COMPUTERS AND ELECTRONICS IN AGRICULTURE, ELSEVIER, AMSTERDAM, NL, vol. 67, no. 1-2, 1 June 2009 (2009-06-01), pages 71 - 79, XP026115493, ISSN: 0168-1699, [retrieved on 20090422], DOI: 10.1016/J.COMPAG.2009.03.004
- PATRICK M KGORI ET AL: "Integrating GIS and GPS-assisted navigation systems to enhance the execution of an SAT-based tsetse elimination project in the Okavango delta (botswana)", PAAT TECHNICAL AND SCIENTIFIC SERIES 9: GEOSPATIAL DATASETS AND ANALYSES FOR AN ENVIRONMENTAL APPROACH TO AFRICAN TRYPANOSOMIASIS, 1 September 2009 (2009-09-01), Rome, Italy, pages 61 - 67, XP055318135, ISBN: 978-92-5-106250-0, Retrieved from the Internet <URL:http://www.fao.org/3/a-i0809e/i0809e04.pdf> [retrieved on 20161110]
- C OVERSTREET ET AL: "Site specific nematode management-development and success in cotton production in the United States", JOURNAL OF NEMATOLOGY, 1 December 2014 (2014-12-01), United States, pages 309 - 320, XP055318256, Retrieved from the Internet <URL:https://www.ncbi.nlm.nih.gov/pmc/articles/PMC4284082/pdf/309.pdf>

## Beschreibung

Die vorliegende Erfindung betrifft das technische Gebiet der Bekämpfung von Schadorganismen beim Anbau von Kulturpflanzen. Gegenstand der vorliegenden Erfindung sind ein Verfahren zur Bekämpfung von Schadorganismen, ein System zur Bekämpfung von Schadorganismen und die Verwendung einer digitalen Applikationskarte zur Applikation eines oder mehrerer Bekämpfungsmittel gegen Schadorganismen.

Beim Anbau von Kulturpflanzen gibt es viele unterschiedliche Organismen, die den Ertrag mindern, die Qualität der Ernte negativ beeinflussen oder einen sonstigen unerwünschten Einfluss auf die Kulturpflanze oder das Erntegut ausüben können.

Solche Schadorganismen sind beispielsweise Unkräuter und Ungräser, Pilze, tierische Schädlinge und Krankheitserreger.

Daneben gibt es viele unterschiedliche Maßnahmen und Mittel zur Verhinderung, Verminderung oder Bekämpfung solcher Schadorganismen.

Beispielsweise können durch den Einsatz von Herbiziden Unkräuter und Ungräser beim Anbau von Kulturpflanzen erfolgreich bekämpft werden.

Allerdings werden beim Einsatz von Herbiziden zunehmend Resistenzen beobachtet. Die Entstehung einer Resistenz gegen ein Herbizid ist ein natürlicher Prozess, der es Pflanzen ermöglicht, sich auf ihre Umweltbedingungen einzustellen und so ihr Überleben zu sichern.

Die Entwicklung resistenter Pflanzen beginnt mit einzelnen Individuen, die in jeder Population natürlich vorkommen, und die resistent gegen die eingesetzten Mittel sind.

Durch wiederholte Anwendungen von Herbiziden mit gleichen oder ähnlichen Wirkungsmechanismen kommt es zu einem Selektionsdruck auf die Unkräuter. Dieser Selektionsdruck begünstigt das Überleben entsprechend angepasster (resistenter) Individuen. Wird keine Strategie zur Abwendung oder Unterbrechung dieses Selektionsprozesses durchgeführt, können resistente Individuen innerhalb einer Population im Lauf der Zeit vorherrschend werden. Daraus entstehen die ersten Bekämpfungsprobleme und schließlich liegt eine resistente Population vor.

Dies gilt nicht nur für die Bekämpfung von Unkräutern und Ungräsern mit Herbiziden sondern in analoger Weise auch für die Bekämpfung anderer Schadorganismen mit entsprechenden Bekämpfungsmitteln.

Um der Bildung einer Resistenz vorzubeugen, gilt es, Bekämpfungsmittel gegen die Schadorganismen nur dort und nur in dem Umfang einzusetzen, wie es nötig ist.

Zum gezielten Einsatz von Bekämpfungsmitteln sind in den vergangenen Jahren verschiedene Ansätze veröffentlicht worden.

Die Offenlegungsschrift WO95/01719 beschreibt ein Computersystem, mit dem ein Feld zunächst in mehrere Zonen aufgeteilt wird, die unabhängig voneinander überwacht werden. Eine Bewässerung und der Einsatz von Chemikalien erfolgt dann zonenweise in Abhängigkeit der Bedürfnisse, die durch die Überwachung ermittelt werden. Für die andauernde Beobachtung der Zonen werden entsprechende Sensoren sowie Mittel zur Datenerfassung, Datenverarbeitung und Datenanalyse benötigt.

Das Patent US 6,199,000 beschreibt ein Verfahren, bei dem während des Pflanzens von Nutzpflanzen ein RTK GPS (Real Time Kinematic Global Positioning System) Empfänger verwendet wird, um eine digitale Karte des Felds zu erzeugen. Durch die hohe Genauigkeit der Positionsbestimmung von RTK GPS sind auf der digitalen Karte die Standorte der einzelnen Nutzpflanzen bis auf wenige Zentimeter genau verzeichnet. Ein mit einem geeigneten Sensor (z.B. einem "Chlorophyll-Detektor") ausgestattetes Fahrzeug kann somit Pflanzen erkennen, die an Orten wachsen, an denen kein Saatgut in den Boden eingebracht worden ist. Werden Pflanzen an Stellen detektiert, an denen keine Aussaat erfolgt ist, handelt es sich mit hoher Wahrscheinlichkeit um ein Unkraut. Dieses kann dann vor Ort direkt bekämpft werden.

WO00/23937 beschreibt ein Computersystem. Teil des Computersystems ist eine digitale Karte eines Ackerfelds, die auf einer fotografischen Aufnahme beruht, und die geografische Längen- und Breitenangaben enthält, so dass eine Positionsbestimmung möglich ist. In dieser digitalen Karte kann ein Anwender Zonen definieren. Den Zonen kann der Anwender Formulierungen von Substanzen (Dünger, Pestizide, Herbizide) und zu applizierende Mengen dieser Substanzformulierungen zuordnen. Das Computersystem kann einen Datensatz erzeugen. Dieser Datensatz ermöglicht es einem Landwirt mit Hilfe eines entsprechenden Fahrzeugs die verschiedenen Zonen des Ackerlands anzufahren und die entsprechenden Mengen an entsprechenden Formulierungen gemäß den vorgenommen Zuordnungen zu applizieren.

In der Dissertationsschrift von Carina Ritter (Evaluation of weed populations under the influence of site-specific weed control to derive decision rules for a sustainable weed management, Institute ofPhytomedicine, Weed Science Department, University of Hohenheim, under the supervision of Prof. Dr. R. Gerhards, 2008) wird beschrieben, wie eine digitale Verteilungskarte von Unkräutern (Galium aparine L. und Alopecurus myosuriodes HUDS) erzeugt und auf Basis dieser Karte Herbizid mit Hilfe eines DGPS-kontrollierten (DGPS=Differential Global Positioning System) Sprühautomaten standortspezifisch appliziert wurde. Dabei wurden teilweise Unkraut-Schwellenwerte berücksichtigt. Es wurden für mehrere Jahre jeweils zunächst die digitalen Unkraut-Verteilungskarten erzeugt und dann wurde auf Basis der Karten eine Behandlung mit Herbiziden vorgenommen, wobei in jedem Jahr nur einmal eine Herbizid-Formulierung standortspezifisch appliziert wurde (siehe insbesondere Tabelle 1 in Kapitel 2.2.2 und Tabelle 6 in Kapitel 3.2.3). Es wurde beobachtet, dass in einigen Feldern Unkrautnester auftraten, die über mehrere Jahre erhalten blieben.

Ein System zur Ausbringung von Pflanzenschutzmitteln mit räumlich variabler Menge bestehend aus einem Differential Global Positioning System, einem tragbaren Computer, einer speziell entwickelten Software und einer Vorrichtung zur Ausbringung von Mengen proportional zur Fahrgeschwindigkeit der Maschine mit dem Ziel den Umwelteinfluss von Herbiziden zu minimieren, wird M Carrara et al:' Spatially Variable Rate Herbicide Application on Durum Weed in Sicily", Biosystems Engineering, Bd. 87, Nr. 4, 1. April 2004 (2004-04-1), Seiten 387-392, IK, ISSN:1437-5110, DOI 10.1016/j.biosystemseng.2004.01.004, vorgeschlagen.

P. Hamouz et al.:"Impact of site-specific weed management on herbicide and savings and winter wheat yield", Plant Soil Environ., 1. März 2013 (2013-03-01) Seiten 101-107, betrifft eine Studie betreffend die praktische Erprobung der standortspezifischen Unkrautbekämpfung in einem Winterweizenfeld und die Optimierung der Bekämpfungsschwellenwerte. Hierbei kam ein aggregiertes Verteilungsmuster von Unkrautpopulationen zum Einsatz um den Herbizideinsatz zu reduzieren, wenn eine standortspezifische Unkrautbekämpfung durchgeführt wird. Hierzu wurde eine Flächenspritzung durchgeführt und Behandlungskarten erstellt.

Ausgehend vom beschriebenen Stand der Technik stellt sich einem Fachmann die technische Aufgabe, Schadorganismen wirkungsvoll und effizient zu bekämpfen, wobei der Einsatz von Bekämpfungsmitteln auf ein sinnvolles und wirtschaftliches Maß zu beschränken ist, und das Risiko der Bildung von Resistenzen gegen die eingesetzten Bekämpfungsmittel zu reduzieren ist. Ferner gilt es, die Ausbildung stabiler Nester von Schadorganismen zu verhindern.

Gelöst wird diese Aufgabe durch die Gegenstände der unabhängigen Ansprüche. Bevorzugte Ausführungsformen finden sich in den abhängigen Ansprüchen sowie in der nachfolgenden Beschreibung.

Ein erster Gegenstand der vorliegenden Erfindung ist ein Verfahren zur Bekämpfung von Schadorganismen auf einem Feld, auf dem Kulturpflanzen angebaut werden, das durch die folgenden Schritte gekennzeichnet ist:
(A) Erzeugen einer digitalen Schadorganismen-Verteilungskarte, auf der Teilflächen auf dem Feld verzeichnet sind, in denen die Schadorganismen detektiert worden sind;
(B) Erzeugen einer digitalen Applikationskarte auf Basis der digitalen Unkraut-Verteilungskarte, wobei auf der digitalen Applikationskarte diejenigen Teilflächen des Feldes verzeichnet sind, auf denen eines oder mehrere Bekämpfungsmittel gegen die Schadorganismen appliziert werden sollen, wobei für jede dieser Teilflächen eine Zahl *N* von Behandlungen mit einem oder mehreren Bekämpfungsmitteln verzeichnet wird, wobei *N* größer als 1 ist;
(C) Applizieren eines oder mehrerer Bekämpfungsmittel gegen die Schadorganismen gemäß der digitalen Applikationskarte aus Schritt (B), wobei die Zahl *N* für die behandelten Teilflächen infolge der Behandlung um 1 vermindert wird;
(D) Wiederholen des Schrittes (C) für jede Teilfläche bis *N* den Wert Null erreicht hat, wobei Bekämpfungsmittel unterschiedlicher Mode of Action verwendet werden und der Mode of Action bzw. die Kombination von Bekämpfungsmitteln von Applikation zu Applikation variiert wird.

Ein weiterer (nicht *per se* beanspruchter) Gegenstand der vorliegenden Offenbarung ist eine digitale Applikationskarte, auf der Teilflächen eines Feldes für Kulturpflanzen verzeichnet sind, die mit einem oder mehreren Bekämpfungsmitteln gegen Schadorganismen behandelt werden sollen, wobei für jede dieser Teilflächen eine ganze Zahl *N* verzeichnet ist, die angibt, wie viele Male die Teilfläche mit einem oder mehreren Bekämpfungsmitteln für die Schadorganismen behandelt werden soll, wobei *N* größer als 1 ist.

Ein weiterer Gegenstand der vorliegenden Erfindung ist ein System zur Bekämpfung von Schadorganismen umfassend:
(a) eine digitale Applikationskarte, auf der diejenigen Teilflächen eines Feldes verzeichnet sind, die mit einem oder mehreren Bekämpfungsmitteln für die Schadorganismen behandelt werden sollen;
(b) ein Positionsbestimmungssystem;
(c) eine Applikations-Vorrichtung, umfassend
   - mindestens einen Behälter zur Aufnahme mindestens eines Bekämpfungsmittels gegen die Schadorganismen,
   - eine Sprühvorrichtung zum Applizieren des mindestens einen Bekämpfungsmittels, und
   - eine Steuereinheit, umfassend einen Arbeitsspeicher zum Einlesen der digitalen Applikationskarte, Mittel zur Kommunikation mit dem Positionsbestimmungssystem und Mittel zur Steuerung der Sprühvorrichtung,
   dadurch gekennzeichnet, dass auf der digitalen Applikationskarte für jede Teilfläche eine Zahl *N* verzeichnet ist, die angibt, wie viele Male eine Behandlung der Teilfläche mit dem Bekämpfungsmittel erfolgen soll, wobei *N* größer als 1 ist, und wobei die Steuereinheit so ausgestaltet ist, dass die Zahl *N* nach einer erfolgten Behandlung um eins vermindert wird, wobei Bekämpfungsmittel unterschiedlicher Mode of Action verwendet werden und der Mode of Action bzw. die Kombination von Bekämpfungsmitteln von Applikation zu Applikation variiert wird.

Ein weiterer Gegenstand der vorliegenden Erfindung ist
die Verwendung einer digitalen Applikationskarte, auf der Teilflächen eines Feldes für Kulturpflanzen verzeichnet sind, bei denen eine Behandlung mit einem oder mehreren Bekämpfungsmitteln gegen Schadorganismen erfolgen soll,
zur Applikation eines oder mehrerer Bekämpfungsmittel gegen die Schadorganismen,
dadurch gekennzeichnet, dass auf der digitalen Applikationskarte für jede der Teilflächen eine Zahl *N* verzeichnet ist, die angibt, wie viele Male eine Behandlung der Teilfläche mit einem oder mehreren Bekämpfungsmitteln erfolgen soll, wobei *N* größer als 1 ist, und wobei die Zahl *N* nach einer erfolgten Behandlung der Teilfläche um eins vermindert wird, wobei Bekämpfungsmittel unterschiedlicher Mode of Action verwendet werden und der Mode of Action bzw. die Kombination von Bekämpfungsmitteln von Applikation zu Applikation variiert wird.

Die Erfindung wird nachstehend näher erläutert, ohne zwischen den Erfindungsgegenständen (Verfahren, System, Verwendung) bzw. der beschriebenen Applikationskarte zu unterscheiden. Die nachfolgenden Erläuterungen sollen vielmehr für alle Erfindungsgegenstände in analoger Weise gelten, unabhängig davon, in welchem Kontext (Verfahren, System, Verwendung) sie erfolgen.

Unter einem "Schadorganismus" wird nachfolgend ein Organismus verstanden, der beim Anbau von Kulturpflanzen in Erscheinung treten und die Kulturpflanze schädigen, die Ernte der Kulturpflanze negativ beeinflussen oder mit der Kulturpflanze um natürliche Ressourcen konkurrieren kann. Beispiele für derartige Schadorganismen sind Unkräuter, Ungräser, tierische Schädlinge wie beispielsweise Käfer, Raupen und Würmer, Pilze und Krankheitserreger (z.B. Bakterien und Viren). Auch wenn Viren aus biologischer Sicht nicht zu den Organismen zählen, sollen sie dennoch vorliegend unter den Begriff Schadorganismus fallen.

Zwischen den genannten Schadorganismen gibt es in der Literatur manchmal Überlagerungen. Insbesondere bei Pilzbefall wird oftmals synonym von Pilz und Krankheit gesprochen. Eine weitere Überlagerung ergibt sich beispielsweise, wenn ein tierischer Schädling einen Virus überträgt. In einem solchen Fall können sowohl der Schädling als auch der Virus als Schadorganismen betrachtet und mit geeigneten Bekämpfungsmitteln bekämpft werden. Für die vorliegende Erfindung sind solche Überlagerungen jedoch unerheblich. Aus Sicht der vorliegenden Erfindung wird ein negativer Effekt beim Anbau einer Kulturpflanze im Feld beobachtet, der in Form von Nestern auftritt. Es gilt, diesen Effekt mit geeigneten Bekämpfungsmitteln zu beseitigen, wobei die Menge an eingesetztem Bekämpfungsmittel auf ein sinnvolles und wirtschaftliches Maß zu beschränken ist.

Unter dem Begriff "Bekämpfung" wird eine Verhinderung der Ausbreitung oder Reduzierung der Menge an vorhandenen Schadorganismen bezeichnet. Im Fall der Unkräuter/Ungräser bezieht sich der Begriff "Menge" beispielsweise auf die Biomasse, die in Form von Unkräutern/Ungräsern vorliegt. Unter dem Begriff "Menge" kann aber insbesondere bei einer Krankheit auch die Menge an Kulturpflanzen verstanden werden, die bereits Krankheitssymptome aufweist.

Die Applikation eines Bekämpfungsmittels auf einer Teilfläche wird vorliegend auch als "Behandlung" bezeichnet; eine "behandelte Teilfläche" ist eine Teilfläche, auf der ein oder mehrere Bekämpfungsmittel appliziert worden sind.

Die Bekämpfung eines Schadorganismus erfolgt durch Applikation eines oder mehrerer Bekämpfungsmittel. Für die einzelnen Schadorganismen existiert eine Vielzahl an Bekämpfungsmitteln, wie beispielsweise Herbizide (gegen Unkräuter und/oder Ungräser), Pestizide (gegen tierische Schädlinge) und Fungizide (gegen Pilze).

Beispielsweise erfolgt die Bekämpfung eines Unkrauts oder Ungrases durch die Applikation mit einem oder mehreren Herbiziden.

Erfindungsgemäß erfolgt eine Bekämpfung von Schadorganismen auf einem Feld durch mehrfache Applikation eines Bekämpfungsmittels an den Orten, an denen die Schadorganismen zumindest einmal detektiert worden sind und an denen mit der Ausbildung stabiler Nester zu rechnen ist.

Unter dem Begriff "Kulturpflanze" wird eine Pflanze verstanden, die durch das Eingreifen der Menschen zielgerichtet als Nutz- oder Zierpflanze angebaut wird.

Unter dem Begriff "Feld" wird ein räumlich abgrenzbarer Bereich der Erdoberfläche verstanden, der landwirtschaftlich genutzt wird, indem auf einem solchen Feld Kulturpflanzen angepflanzt, mit Nährstoffen versorgt und geerntet werden.

Unter dem Begriff "Nest" wird eine Teilfläche eines Feldes verstanden, auf dem ein bestimmter Schadorganismus wiederholt beobachtet wird.

Die nachfolgenden Ausführungen befassen sich vornehmlich mit Unkräutern und Ungräsern als Schadorganismen; sie sollen aber in analoger Weise für alle möglichen Schadorganismen gelten. Die Erfindung ist demnach nicht auf Unkräuter und Ungräser als Schadorganismen beschränkt, auch wenn sie vorzugsweise zur Bekämpfung von Unkräutern und/oder Ungräsern mittels Herbiziden eingesetzt wird.

Unter dem Begriff "Unkraut" (Mehrzahl: Unkräuter) werden Pflanzen der spontanen Begleitvegetation (Segetalflora) in Kulturpflanzenbeständen, Grünland oder Gartenanlagen verstanden, die dort nicht gezielt angebaut werden und z.B. aus dem Samenpotential des Bodens oder über Zuflug zur Entwicklung kommen. Der Begriff ist nicht auf Kräuter im eigentlichen Sinne beschränkt, sondern umfasst auch Gräser, Farne, Moose oder holzige Pflanzen.

Im Bereich des Pflanzenschutzes wird häufig auch der Begriff "Ungras" (Mehrzahl: Ungräser) benutzt, um eine Abgrenzung zu den krautigen Pflanzen zu verdeutlichen. Im vorliegenden Text wird der Begriff Unkraut als Oberbegriff verwendet, der den Begriff Ungras mit erfassen soll, es sei denn, es wird auf spezifische Unkräuter oder Ungräser Bezug genommen.

Ungräser und Unkräuter im Sinne der vorliegenden Erfindung sind demnach Pflanzen, die beim Anbau einer gewünschten Kulturpflanze als Begleitung auftreten. Da sie mit der Kulturpflanze um Ressourcen konkurrieren, sind sie unerwünscht und sollen daher bekämpft werden.

Die Erfindung wird vorzugsweise für solche Schadorganismen eingesetzt, die für konstant stabile oder wiederkehrende Nester auf denselben Teilflächen eines Feldes bekannt sind (Nordmeyer H. 2006. Patchy weed distribution and site-specific weed control in winter cereals. Precision Agric 7, 219-231). Die Nester werden in der Regel über eine Vegetationsperiode der Kulturpflanze hinaus beobachtet. Ein Beispiel für einen besonders bevorzugten Anwendungsfall stellt das Acker-Fuchsschwanzgras (Alopecurus myosuroides Huds) dar, welches eine Samenverbreitung nahe der Mutterpflanze aufweist (Wilson BJ, Brain P. 1991. Long-term stability of distribution of Alopecurus myosuroides Huds. within cereal fields. Weed Res 31, 367-373). Hierbei sind die Unkrautnester stabil bzw. wiederkehrend; es können allerdings auch neue hinzukommen. Weitere bevorzugte Beispiele sind Orobranche crenata Forsk in Ackerbohne (Oveisi M, Yousefi AR, Gonzalez-Andajur JL. Spatial distribution and temporal stability of crenate broomrape (Orobranche crenata Forsk) in faba bean (Vicia faba L.): A long-term study at two localities. Crop Protection 29, 2010, 717-720), Galium aparine, V. arvensis Murr., C. album L., Polygonum aviculare L. (s. Übersicht in Spatial and Temporal Dynamics of Weed Populations. In "Precision Crop Protection - the Challenge and Use of Heterogeneity. Eds.: Oerke, EC, Gerhards R, Menz G, Sikora RA. Springer, 2010, Heidelberg. ISBN 978-90-481-9276-2, S. 17-25).

Ferner kann die Erfindung auf alle Krankheiten und tierische Schädlinge angewendet werden, die räumlich stabile Muster aufweisen. Ein Beispiel ist der Befall durch Nematoden (Campos-Herrera R., Johnson E.G., EL-Borai F.E., Stuart R.J., Graham J.H,. Duncan L.W. 2011. Long-term stability of entomopathogenic nematode spatial patterns in soil as measured by sentinel insects and real-time PCR assays, Ann Appl Biol 158: 55-68; Godefroid M., Delaville L., Marie-Luce S., Quénéhervé P. 2013. Spatial stability of a plant-feeding nematode community in relation to macro-scale soil properties. Soil Biology & Biochemistry 57: 173-181; B.V. Ortiz, C. Perry, P. Goovaerts, G. Vellidis, and D. Sullivane. Geostatistical modeling of the spatial variability and risk areas of southern root-knot nematodes in relation to soil properties. Geoderma. 2010 May; 156(3-4): 243-252).

Ein "räumlich stabiles Muster" bezeichnet eine wiederholt beobachtbare bzw. messbare räumliche Verteilung bzw. Anordnung von Nestern in einem Feld. Ferner kann sich ein räumlich stabiles Muster von Krankheiten und Schädlingen auf i) die Ursache einer Krankheit oder Schädlingsbefalles, ii) auf die Krankheit oder den Schädlingsbefall selbst als auch iii) auf ein Ausprägungsmerkmal einer Krankheit bzw. eines Schädlingsbefalls beziehen. Beispielsweise kann ein Schädling W einen Virus X übertragen, der zu einer Krankheit Y mit dem Symptom Z führt. Es ist denkbar, dass W, X, Y und/oder Z messbar sind und jeweils ein stabiles Muster ergeben.

Insbesondere können diese Muster durch eine Wechselwirkung von Entwicklungszyklus des Krankheitserregers bzw. Schädlings mit weiteren abiotischen Faktoren hervorgerufen werden. Die Erfindung ist daher auch auf Regionen im Feld anzuwenden, die aufgrund ihrer Beschaffenheit einen generell höheren Krankheits- oder Schädlingsdruck aufweisen. Beispiele solcher Beschaffenheitsfaktoren sind Lage bzw. Exposition, Mulden, Boden oder Feldrandbeschaffenheit (z.B. Hecken).

Als Beispiel sei die Septoria-Blattdürre angeführt, die bei günstigen Bedingungen für die Infektion durch Pilzsporen von Septoria Tritici entsteht. Diese günstigen Bedingungen können nun durch eine höhere Feuchte bzw. durch einen geringeren Luftaustausch gegeben sein, bedingt durch Exposition, lokale Mulden und/oder Bodenart.

Ein Beispiel für einen Schädling, bei dem wiederkehrende Muster auftreten, ist die Kohlschotenmücke (*Dasineura brassicae*) bei Raps. Durch die geringe Flugbereitschaft ist für einen Befall die Distanz zum Winterwirt maßgeblich. Ein wiederkehrendes Muster ergibt sich hier durch die Lage des Feldes relativ zu der des Winterwirtes als auch zu der des Feldes mit Rapsanbau im Vorjahr.

Ein weiteres Beispiel sind Erreger, deren Befallsdruck durch die Abbaurate von Pflanzenresten im Boden bestimmt wird. Stabile Nester können hier durch lokale Unterschiede im Boden hervorgerufen werden.

In einem ersten Schritt des erfindungsgemäßen Verfahrens wird eine digitale Schadorganismen-Verteilungskarte erstellt. Auf dieser Karte sind Teilflächen des Feldes verzeichnet, bei denen die Schadorganismen detektiert worden sind.

Der Begriff "digital" bedeutet, dass die Karte von einer Maschine, in der Regel einem Computersystem, verarbeitet werden kann. Unter "Verarbeitung" werden die bekannten Verfahren zur elektronischen Datenverarbeitung (EDV) verstanden.

Methoden zur Erzeugung von digitalen Karten, auf denen Orte verzeichnet sind, an denen Unkräuter und/oder Ungräser aufgetreten sind, sind beispielsweise in der Dissertation von Carina Ritter beschrieben: Evaluation of weed populations under the influence of site-specific weed control to derive decision rules for a sustainable weed management, Institute of Phytomedicine, Weed Science Department, University of Hohenheim, under the supervision of Prof. Dr. R. Gerhards, 2008 (siehe insbesondere Kapitel 1.1.5).

Auch die in GB2447681A, US 6,199,000, US 2009/0132132A1 und WO00/23937 beschriebenen Verfahren zur Erzeugung von digitalen Unkraut-Verteilungskarten lassen sich hier anwenden.

Bei der Erzeugung der digitalen Schadorganismen-Verteilungskarte wird das Feld nach Schadorganismen abgesucht. Dieses Absuchen kann durch einen (oder mehrere) Menschen oder rein maschinell erfolgen. Denkbar ist auch ein maschinengestütztes Absuchen durch einen (oder mehrere) Menschen. Bevorzugt wird die Suche nach Schadorganismen durch ein Positionsbestimmungssystem unterstützt. Das bedeutet, dass sich ein Mensch oder eine Maschine auf oder über dem Feld bewegt und die jeweilige Position des Menschen oder der Maschine mit Hilfe des Positionsbestimmungssystems automatisch erfasst und gespeichert wird. Geeignete Positionsbestimmungssysteme werden oft unter dem Begriff GPS (Global Positioning System) zusammengefasst.

Entdeckt der Mensch oder die Maschine einen Schadorganismus an einem Ort, so wird auf der digitalen Karte abgespeichert, dass an dem Ort ein Schadorganismus vorgefunden wurde.

Neben der Tatsache, dass ein Schadorganismus an einem bestimmten Ort gefunden worden ist, können weitere Informationen auf der digitalen Karte abgespeichert werden, wie z.B. die Art des gefundenen Schadorganismus, die Menge, das Entwicklungsstadium und weitere Informationen.

Zur maschinellen Erkennung von Schadorganismen kann der Schadorganismus mittels einer fotografischen Einrichtung als digitales Bild aufgenommen und dann Methoden der Bilderkennung zugeführt werden.

Das maschinelle Absuchen des Feldes nach Schadorganismen kann beispielsweise mit einem Fahrzeug oder einem unbemannten Flugobjekt (Drohne) erfolgen. Auch der Einsatz von Satellitenaufnahmen des Feldes zur Erkennung von Schadorganismen ist denkbar.

Um den flächenspezifischen Einsatz verschiedener Formulierungen zu ermöglichen, werden Unkräuter/Ungräser in der Unkraut-Verteilungskarte vorzugsweise als Mono- und Dikotyledone identifiziert bzw. in Gruppen von Unkräutern und/oder Ungräsern hinsichtlich geeigneter bzw. wirksamer Formulierungen erfasst.

Bei der Generierung der Schadorganismen-Verteilungskarte ist zu beachten, dass nicht immer unbedingt die Schadorganismen selbst beobachtet werden, sondern deren Auswirkungen z.B. auf die Kulturpflanze. Dies ist jedoch für die vorliegende Erfindung unerheblich. Der Schritt (A) des erfindungsgemäßen Verfahrens ist also so zu verstehen, dass Positionen auf dem Feld detektiert und auf der digitalen Verteilungskarte verzeichnet werden, die auf das Vorhandensein eines Schadorganismus hindeuten. Der Schadorganismus wird also direkt oder indirekt (infolge seiner Auswirkungen auf die Umwelt) detektiert.

Das Ergebnis des Schritts (A) ist eine maschinenlesbare Karte, auf der Positionen verzeichnet sind, an denen Schadorganismen oder deren Wirkungen aufgefunden worden sind.

In einem nachfolgenden Schritt wird auf Basis der digitalen Schadorganismen-Verteilungskarte eine digitale Applikationskarte erzeugt.

Die digitale Applikationskarte ist maschinenlesbar und gibt an, bei welchen Teilflächen des Feldes eine Applikation eines oder mehrerer Bekämpfungsmittel erfolgen soll.

Bei der digitalen Applikationskarte kann es sich um eine so genannte AN/AUS-Karte handeln. Es ist zum Beispiel denkbar, dass überall dort, wo auf der digitalen Schadorganismen-Verteilungskarte ein Schadorganismus verzeichnet ist, auf der entsprechenden Applikationskarte verzeichnet ist, dass dort ein oder mehrere Bekämpfungsmittel appliziert werden sollen, während überall dort, wo auf der Schadorganismen-Verteilungskarte kein Schadorganismus verzeichnet ist, auf der digitalen Applikationskarte verzeichnet ist, dass dort kein Bekämpfungsmittel appliziert werden soll.

Eine solche AN/AUS-Karte ist zum Beispiel dann sinnvoll, wenn die Detektionsmethode zum Auffinden von Schadorganismen in Schritt (A) des erfindungsgemäßen Verfahrens nicht sonderlich empfindlich ist, sondern Schadorganismen nur dann entdeckt, wenn sie bereits in einer Menge vorliegen, bei der eine Schadschwelle bereits erreicht oder sogar überschritten ist.

Ist die Detektionsmethode hingegen sehr sensitiv, wird in der digitalen Applikationskarte vorzugsweise erst dann die Applikation eines Bekämpfungsmittels eingetragen, wenn an dem entsprechenden Ort ein vorher definierter Schwellenwert erreicht oder überschritten worden ist. Dazu ist es erforderlich, dass auf der digitalen Schadorganismen-Verteilungskarte die (ungefähre) Menge des jeweils vorhandenen Schadorganismus (oder die Menge an befallener Kulturpflanze) erfasst ist. Auf der digitalen Applikationskarte ist dann nur an denjenigen Orten eine geplante Bekämpfungsmittel-Applikation verzeichnet, an denen der Schwellenwert an vorhandenem Schadorganismus erreicht oder überschritten worden ist. An allen übrigen Orten ist der Schwellenwert unterschritten; dementsprechend ist keine Bekämpfungsmittel-Applikation vorgesehen und auf der Applikationskarte ist keine geplante Applikation verzeichnet.

"Schadschwelle" ist ein Begriff aus der Landwirtschaft, der Forstwirtschaft und dem Gartenbau. Er gibt die Befallsdichte mit Schaderregern, Krankheiten oder den Besatz mit Unkräutern an, ab denen eine Bekämpfung wirtschaftlich sinnvoll wird. Bis zu diesem Wert ist der wirtschaftliche Mehraufwand durch eine Bekämpfung größer als der zu befürchtende Ernteausfall. Übersteigt der Befall oder die Verunkrautung diesen Wert, werden die Bekämpfungskosten durch den zu erwartenden Mehrertrag zumindest ausgeglichen.

Je nach dem Wesen eines Schädlings oder einer Krankheit kann die Schadschwelle sehr unterschiedlich sein. Bei Schädlingen oder Krankheiten, die nur mit großem Aufwand und mit negativen Begleiterscheinungen für die weitere Produktion zu bekämpfen sind, kann die Schadschwelle sehr hoch sein. Kann jedoch schon ein geringer Befall zu einem Ausbreitungsherd werden, der die gesamte Produktion zu vernichten droht, kann die Schadschwelle sehr niedrig sein.

Im Stand der Technik finden sich viele Beispiele zur Ermittlung von Schadschwellen (siehe z.B. Claus M. Brodersen: Informationen in Schadschwellenmodellen, Berichte der GIL, Band 7, Seiten 26 bis 36, http://www.gil-net.de/Publikationen/7_26.pdf).

In einer bevorzugten Ausführungsform fließen zur Erstellung der digitalen Applikationskarte Informationen über Faktoren ein, die das Auftreten des Schadorganismus hervorrufen oder dessen Ausbreitung begünstigen.

Es ist denkbar, dass die Applikationskarte Mengenangaben über die zu applizierende Bekämpfungsmittel-Formulierung enthält. Auch die Art des Bekämpfungsmittels oder die Art der Formulierung kann auf der digitalen Applikationskarte gespeichert sein.

Die digitale Applikationskarte wird bei der ersten Erfassung eines Schadorganismus an einer bestimmten Position erstellt und die Anzahl *N* an Applikationen für diesen Schadorganismus an dieser Position festgelegt. Die Zahl *N* der Applikationen ist von der Art des detektierten Schadorganismus abhängig. Die Zahl der Applikationen beträgt mindestens zwei; vorzugsweise beträgt sie zwei, drei, vier oder fünf, und sie ist ebenfalls auf der Applikationskarte für jede betroffene Teilfläche hinterlegt.

In einer bevorzugten Ausführungsform wird die digitale Schadorganismen-Verteilungskarte für ein Feld innerhalb der Zeitspanne, in der die mehrfache Applikation eines Bekämpfungsmittels gemäß der digitalen Applikationskarte erfolgen soll, erneut erstellt und die digitale Applikationskarte um neu gefundene Nester erweitert. Teilflächen, bei denen in der digitalen Applikationskarte eine noch zu tätigende Applikation eines Bekämpfungsmittels verzeichnet ist (*N*>0), bleiben bestehen, auch wenn aktuell kein Schadorganismus mehr detektiert wird. Wenn also für eine Teilfläche auf der digitalen Applikationskarte festgelegt worden ist, dass dort mehrfach (*N*-fach) ein Bekämpfungsmittel appliziert werden soll, die Anzahl an vorzunehmenden Applikationen in der Realität aber noch nicht erreicht ist, bleibt die Information, dass (weiterhin) auf dieser Teilflächen appliziert werden soll, bestehen, auch wenn an dem entsprechenden Ort kein Schadorganismus mehr detektiert worden ist.

Eine mehrfache Applikation bedeutet nicht zwingend, dass die gleiche Formulierung mehrfach verwendet werden muss. Erfindgungsgemäß ist vorgesehen, Spritzmittel unterschiedlicher Mode of Action zu verwenden und den Mode of Action bzw. die Kombination von Spritzmitteln von Applikation zu Applikation zu variieren.

Die Formulierung kann ferner in Folgejahren bei Detektion eines weiteren Schadorganismus auf derselben Teilfläche eines Feldes entsprechend verändert werden. Insbesondere kann dies dazu führen, dass Teilflächen eines Feldes mit einem Schadorganismus jeweils mit einer Formulierung, gemeinsame Teilflächen mit mehreren Schadorganismen mit einer weiteren Formulierung behandelt werden.

Dies sei anhand der folgenden Beispiele erläutert, bei dem zwei Unkräuter (Unkraut 1 und Unkraut 2) auf derselben Teilfläche eines Feldes auftreten.
Beispiel 1: Unkraut 1 und Unkraut 2 sind empfindlich gegenüber Herbizid 1 → Herbizid 1 wird appliziert.
Beispiel 2: Unkraut 1 ist empfindlich gegenüber Herbizid 1 und Unkraut 2 ist empfindlich gegenüber Herbizid 2 und es ist kein einsetzbares Herbizid bekannt, das sowohl gegen Unkraut 1 als auch gegen Unkraut 2 wirkt → Herbizid 1 und Herbizid 2 werden appliziert.
Beispiel 3: Unkraut 1 ist empfindlich gegenüber Herbizid 1 und Unkraut 2 ist empfindlich gegenüber Herbizid 2 und es ist ein einsetzbares Herbizid 3 bekannt, das gegen Unkraut 1 als auch Unkraut 2 wirkt → Es kann entweder Herbizid 3 allein oder Herbizid 1 in Kombination mit Herbizid 2 appliziert werden.

Beispielsweise werden bei der Bekämpfung des Ungrases Ackerfuchsschwanz folgende Bekämpfungsmittel verwendet: bei der Herbstanwendung ab BBCH Stadium 11 wird eine Sulfonylmischung bestehend aus den Wirkstoffen Mesosulfuron und Iodusulforon (vorzugsweise plus Safener) eingesetzt. Bei Wirkstoffwechsel werden dann Propoxycarbazone oder Pyroxsulam und Florasulam verwendet. Wenn im Frühjahr das Ungras wiederholt die Schadschwelle überschreitet, dann wird auch im Frühjahr eine Behandlung mit beispielsweise den Wirkstoffen Mesosulfuron und Iodusulforon (plus Safener) durchgeführt. Neben der Gruppe der ALS-Hemmer gibt es auch eine andere Wirkstoffgruppe, die der ACCase-Hemmer mit den sogenannten FOPS. Die Art des Wirkstoffes und die Ausbringungsmenge hängen von Art des Unkrautes oder Ungrases, der Anzahl der Pflanzen pro m² oder Biomasse des Unkrautes oder Ungrases und dem Grad der Resistenz ab.

Ferner ist denkbar, dass die digitale Applikationskarte Befehle für eine Applikationsvorrichtung für eine Bekämpfungsmittel-Formulierungen enthält. Das bedeutet, dass die digitale Applikationskarte oder Teile davon in einen Arbeitsspeicher einer Applikationsvorrichtung geladen werden können, von wo die Befehle an eine Sprühvorrichtung übermittelt werden.

Unter einer Applikationsvorrichtung wird eine maschinelle Vorrichtung zum Applizieren einer Bekämpfungsmittel-Formulierung auf einem Feld verstanden. Eine solche Applikationsvorrichtung umfasst in der Regel mindestens einen Behälter zur Aufnahme mindestens einer Bekämpfungsmittel-Formulierung, eine Sprühvorrichtung, mit der die Bekämpfungsmittel-Formulierung auf dem Feld abgegeben wird und eine Steuereinrichtung, mit der die Förderung der mindestens einen Bekämpfungsmittel-Formulierung aus ihrem Behälter in Richtung Sprühvorrichtung gesteuert wird. Die digitale Applikationskarte wird dementsprechend vorzugsweise in dem Arbeitsspeicher der Steuereinheit gespeichert. Die Steuereinheit steht darüber hinaus vorzugsweise mit einem Positionsbestimmungssystem in Verbindung, das die Lage der Applikationsvorrichtung auf dem Feld ermittelt. Vorzugsweise setzt die Steuereinrichtung den Applikationsprozess dann in Gang, wenn auf der digitalen Applikationskarte verzeichnet ist, dass an einem Ort eine Applikation erfolgen soll und wenn das Positionsbestimmungssystem meldet, dass sich die Applikationsvorrichtung gerade an diesem Ort befindet.

In einem nächsten Schritt des erfindungsgemäßen Verfahrens erfolgt die Applikation eines oder mehrerer Bekämpfungsmittel gegen die in Schritt (A) identifizierten Schadorganismen unter Verwendung der digitalen Applikationskarte.

In einer Ausführungsform lädt sich ein Mensch (Nutzer) die digitale Applikationskarte in ein mobiles Computersystem, z.B. ein Mobiltelefon (Smartphone), das über einen GPS-Empfänger verfügt. Während der Nutzer über das Feld geht, zeigt ihm das mobile Computersystem anhand einer grafischen Abbildung des Feldes an, wo er sich jeweils befindet und an welchen Stellen er manuell ein oder mehrere Bekämpfungsmittel sprühen (applizieren) soll. Er sprüht dann manuell an den Stellen, an denen die Applikationskarte einen entsprechenden Hinweis enthält. Falls der Nutzer ein Bekämpfungsmittel an einer Stelle appliziert, ist es denkbar, dass über eine entsprechende Sensorik dem mobilen Computersystem eine Rückmeldung über den erfolgten Applikationsprozess übermittelt und der erfolgte Applikationsprozess gespeichert wird. Es ist auch denkbar, dass der erfolgte Applikationsprozess auf dem mobilen Computersystem angezeigt wird, damit der Nutzer erkennen kann, an welchen Stellen er bereits appliziert hat. Ferner ist denkbar, dass die auf dem mobilen Computersystem erfassten Daten sofort oder zu einem späteren Zeitpunkt an ein stationäres Computersystem (z.B. einen Server) übermittelt und dort gespeichert werden. In jedem Fall wird die erfolgte Applikation für jede Teilfläche in der Weise in der digitalen Applikationskarte erfasst, dass die Zahl *N* der (noch) zu tätigenden Applikationen (Behandlungen) um eins vermindert wird.

Denkbar ist auch, dass ein Mensch mit einem Fahrzeug über das Feld fährt, die jeweilige Position des Fahrzeugs mittels GPS-Empfänger erfasst wird, und auf Basis der digitalen Applikationskarte Befehle an eine Sprühvorrichtung am Fahrzeug übermittelt werden, wenn sich das Fahrzeug an einem Ort auf dem Feld befindet, an dem gemäß Applikationskarte eine Applikation eines oder mehrerer Bekämpfungsmittel erfolgen soll, woraufhin die entsprechende Applikation automatisch erfolgt.

Denkbar ist auch, dass die Applikation eines oder mehrerer Bekämpfungsmittel vollautomatisch erfolgt: eine unbemannte Maschine bewegt sich GPS-gestützt über das Feld und appliziert an den Stellen auf dem Feld, an denen in der digitalen Applikationskarte eine entsprechende Applikation vorgesehen ist. Wieder wird die erfolgte Applikation in der digitalen Applikationskarte verzeichnet: für die behandelten Teilflächen wird die Zahl *N* um eins vermindert.

Die Bekämpfung von Schadorganismen mit entsprechenden Pflanzenschutzmitteln auf chemischer und/oder biologischer Basis kann durch physikalische/mechanische Bekämpfungsmethoden ergänzt werden.

Unter physikalischer Entfernung (oder auch mechanischer Entfernung) wird verstanden, dass beispielsweise das Unkraut/Ungras als Schadorganismus entweder vollständig entfernt wird, oder Teile davon entfernt werden, so dass das Unkraut/Ungras nicht mehr lebensfähig ist und abstirbt. Im Gegensatz zur Bekämpfung des Unkrauts/Ungrases mit einem Herbizid, was als chemische Bekämpfung bezeichnet werden kann, wird bei der physikalischen/mechanischen Bekämpfung kein chemisches oder biologisches Mittel appliziert. Die physikalische/mechanische Bekämpfung übt daher auch keinen Selektionsdruck auf die Unkräuter/Ungräser aus, ist jedoch oftmals aufwändiger und teurer als die Applikation von Herbiziden.

Unter einer physikalischen/mechanisch Bekämpfung soll auch beispielsweise eine Bewässerung verstanden werden, mit der beispielsweise Unkräuter gewünscht zum Auflaufen gebracht werden, um sie dann gezielt zu eliminieren. Unter einer physikalischen/mechanisch Bekämpfung soll zudem auch ein Abflammen der Schadorganismen verstanden werden.

Es ist beispielsweise denkbar, chemische und physikalische Verfahren abwechselnd anzuwenden.

Es ist auch denkbar, dass ein Teil einer Fläche chemisch, ein anderer Teil physikalisch behandelt wird.

Denkbar ist aber auch eine kombinierte Variante in einem Arbeitsgang, z.B. wenn der Einsatz von Chemikalien aufgrund gesetzlicher Reglungen begrenzt ist oder eine Kombination von Schadorganismen vorliegt, bei der eine kombinierte Bekämpfung mit mechanischen und chemischen Mitteln die besten Erfolgsaussichten hat. Die kombinierte Anwendung physikalischer und chemischer Verfahren kann auch sinnvoll sein, wenn die Kombination einen synergistischen Effekt ausübt.

In einer bevorzugten Ausführungsform erfolgt an den Stellen des Feldes, an denen zwar kein Schwellenwert eines Schadorganismus überschritten worden ist, an denen aber ein Schadorganismus detektiert worden ist, eine physikalische Entfernung des Schadorganismus.

Die Applikation eines oder mehrerer Bekämpfungsmittels auf Basis der digitalen Applikationskarte wird eine gewisse Zeit in Anspruch nehmen. Diese Zeit richtet sich z.B. nach der Größe des Feldes, der Anzahl der Stellen im Feld, an denen eine Applikation erfolgen soll, der Größe dieser Stellen und der Menge an Bekämpfungsmittel, die eine Applikationsvorrichtung mit sich führen kann (unter Umständen reicht die Menge an Bekämpfungsmittel, die eine Applikationsvorrichtung mit sich führen kann, nicht aus, um alle Stellen, die auf der Applikationskarte verzeichnet sind, mit Bekämpfungsmittel zu versorgen, so dass die Applikationsvorrichtung einmal oder mehrfach aufgefüllt werden muss, was Zeit in Anspruch nimmt).

Unter "Abarbeiten der Applikationskarte" wird der Prozess verstanden, bei dem alle Stellen im Feld, für die auf der digitalen Applikationskarte verzeichnet ist, dass ein oder mehrere Bekämpfungsmittel appliziert werden sollen, von einer Applikationsvorrichtung aufgesucht worden sind und die entsprechende Applikation vorgenommen worden ist.

Wird die Applikationskarte das erste Mal, nachdem sie erstellt worden ist, abgearbeitet, so wird dieser Prozess hier als "erstes Applizieren" bezeichnet.

In der Regel wird das Abarbeiten der digitalen Applikationskarte je nach Größe des Feldes weniger als einen Tag bis 2 Wochen in Anspruch nehmen.

Die Zeitdauer des ersten Abarbeitens erfolgt somit innerhalb einer ersten Zeitspanne.

Erfindungswesentlich ist, dass die digitale Applikationskarte mindestens ein zweites Mal abgearbeitet wird. Die auf der Applikationskarte verzeichneten Nester werden damit mehrfach (z.B. 2-fach, 3-fach, 4-fach oder 5-fach) mit einem Bekämpfungsmittel besprüht.

Es erfolgt somit nach Schritt (C) des erfindungsgemäßen Verfahrens ein Schritt (D), bei dem dieselben Orte auf der Applikationskarte innerhalb einer zweiten Zeitspanne noch einmal besprüht werden (zweites Abarbeiten der Applikationskarte).

Denkbar ist, dass dieselbe Applikationskarte innerhalb einer dritten Zeitspanne ein drittes Mal abgearbeitet wird.

Denkbar ist, dass dieselbe Applikationskarte innerhalb einer vierten Zeitspanne ein viertes Mal abgearbeitet wird.

Ein weiteres wiederholtes Abarbeiten ist denkbar, aber jedes auf das dritte Abarbeiten erfolgende weitere Abarbeiten ist weniger wahrscheinlich.

Die Schritte (C) und (D) können daher auch unter dem Punkt zusammengefasst werden: mehrfaches Anwenden der in Schritt (B) erzeugten digitalen Applikationskarte in der Weise, dass bei den Teilflächen des Feldes, bei denen eine Schadschwelle eines oder mehrerer Schadorganismen überschritten sind, mehrfach (*N*-fach) ein oder mehrere Bekämpfungsmittel appliziert werden (auch, wenn zum Zeitpunkt der Applikation kein Schadorganismus mehr detektiert wird).

Wie oben beschrieben, kann die Applikationskarte zu jeder Zeit erweitert werden, indem neu detektierte Nester aufgenommen werden.

Zwischen dem ersten Abarbeiten der Applikationskarte innerhalb der ersten Zeitspanne (Schritt (C)) und dem zweiten Abarbeiten der Applikationskarte innerhalb der zweiten Zeitspanne (Schritt (D)) liegt eine Zeitspanne, in der keine Applikation eines Bekämpfungsmittels erfolgt. Diese Zeitspanne beträgt mindestens einen Tag, vorzugsweise mindestens eine Woche, noch mehr bevorzugt mindestens einen Monat. Wird die Applikationskarte in einer dritten Zeitspanne ein drittes Mal abgearbeitet, so liegt zwischen der zweiten Zeitspanne und der dritten Zeitspanne wiederum eine Zeitspanne von mindestens einem Tag, vorzugsweise mindestens einer Woche, noch mehr bevorzugt mindestens einem Monat, in der keine Applikation erfolgt.

Analoges gilt für jedes weitere Abarbeiten der Applikationskarte.

Der Zeitabstand zwischen zwei Behandlungen einer Teilfläche wird maßgeblich dadurch bestimmt, wann mit einem erneuten Auftreten von Schadorganismen zu rechnen ist. Eine Teilfläche wird also vorzugsweise erst dann ein weiteres Mal behandelt, wenn mit einem erneuten Auftreten von Schadorganismen zu rechnen ist, besonders bevorzugt, bevor sich ein erneuter Befall der Teilfläche mit den Schadorganismen weiter auf andere Teilflächen ausbreitet.

Das mehrfache (mindestens zweifache) Abarbeiten der Applikationsklarte erfolgt vorzugsweise über das laufende Vegetationsjahr und/oder folgende Vegetationsjahre, jeweils innerhalb des Zeitraumes der Vorauflaufphase bis Ende der Vegetationsperiode der Kulturpflanze, die auf dem Feld angebaut wird.

Unter "Vorauflaufphase" wird hier der Zeitraum vom ersten Tag nach Ernte der Vorfrucht bis zum letzten Tag vor dem Aufgang der Kultur betrachtet.

In einer Ausführungsform der vorliegenden Erfindung entspricht die Zeitspanne zwischen zwei Applikationen der Dauer einer Vegetationsperiode der angebauten Kulturpflanze (plus/minus 1 Tag bis 8 Wochen).

Vorzugsweise wird jedes Jahr auf dem landwirtschaftlich genutzten Feld eine erweiterte digitale Schadorganismen-Verteilungskarte erstellt, zum einen, um den Bestand an Schadorganismen zu prüfen, und zum anderen, um die digitale Applikationskarte zu adaptieren, indem gegebenenfalls neu dazugekommene Orte, an denen eine Schadschwelle überschritten worden ist, aufgenommen werden.

Die Erfindung führt insbesondere bei der effektiven Bekämpfung von z.B. Unkräutern/Ungräsern zu geringerer Entwicklung von Resistenzen:
- Der Resistenzdruck eines Feldes mit teilflächenspezifischer Applikation ist insgesamt niedriger als auf einer Fläche ohne teilflächenspezifische Applikation, da eben nur ein Teil der Fläche des Ackers dem Selektionsdruck ausgesetzt wird.
- Durch das Ausbringen der gleichen Menge bzw. Konzentration eines Herbizides auf einer Teilfläche wie auch bei nicht-teilflächenspezifischer Applikation werden sogenannte multigene Resistenzen, die sich sonst quantitativ bei wiederholtem Spritzen mit niedrigen Dosen aufbauen, vermieden. Dies entspricht der ,guten landwirtschaftlichen Praxis'.
- Durch wiederholte Anwendung der Applikationskarte wird das Überleben einzelner Individuen von Unkräutern/Ungräsern unwahrscheinlicher auf den identifizierten Patches der Unkrauterkennungskarte. Eine jährliche Erstellung der Karte überprüft diesen Sachverhalt und wirkt somit einer Resistenz auf nicht behandelten Teilflächen entgegen.
- Die Verwendung verschiedener Herbizide steigert den Behandlungserfolg und verringert damit die Entwicklung von Resistenzen gegen ein bestimmtes Spritzmittel.

Die Erfindung wird nachstehend anhand eines Beispiels näher erläutert.

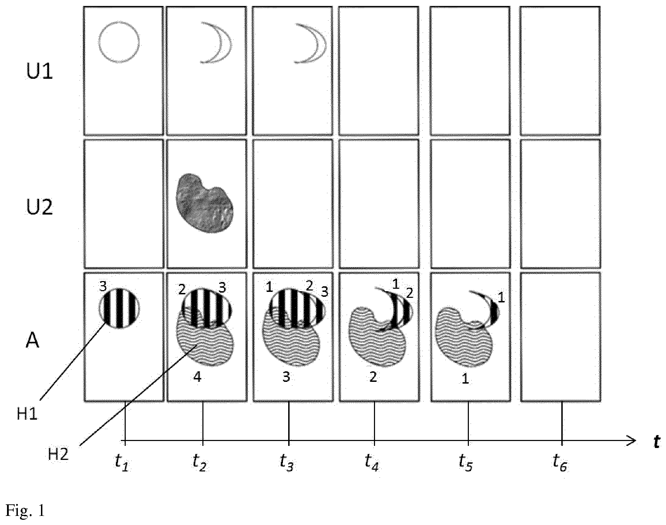

Fig. 1 zeigt unterschiedliche Repräsentationen eines Feldes zu verschiedenen Zeitpunkten *t₁* bis *t₆.* Die Repräsentationen des Feldes sind als Rechteck dargestellt. Die oberste, mit U1 beschriftete Zeile ist eine Unkraut-Verteilungskarte für das Unkraut U1. Die mittlere, mit U2 beschriftete Zeile ist eine Unkraut-Verteilungskarte für das Unkraut U2. Die unterste mit A beschriftete Zeile ist eine Applikationskarte für zwei verschiedene Herbizide H1 und H2.

Die Zeit ist in sechs Momentaufnahmen *t₁* bis *t₆* unterteilt. Die Zeit schreitet dabei spaltenweise von links nach rechts fort.

In der ersten Spalte ist demnach das Feld zu einem ersten Zeitpunkt dargestellt, in der zweiten Spalte zu einem späteren zweiten Zeitpunkt und so fort. Die Zeitspannen, die zwischen zwei Spalten liegen, können beispielsweise die Dauer einer Vegetationsperiode (in der Regel ein Jahr) der Kulturpflanze, die auf dem Feld angebaut wird, betragen. Es kann sich auch um die Vegetationsperiode eines Unkrauts/Ungrases handeln. In der Regel hat in dem Zeitraum, der zwischen zwei aufeinanderfolgenden Spalten liegt, die Applikation eines oder mehrerer Herbizide stattgefunden - dies ist in der unteren Zeile A dargestellt - es sei denn, es wurden über mehrere Zeitabschnitte hinweg keine Unkräuter detektiert (letzte Spalte).

In der obersten Zeile ist dargestellt, wo im Feld zu den Zeitpunkten *t₁* bis *t₆* das Unkraut U1 detektiert worden ist.

Die Felder U1(*t₁*)*,* U1(*t₂*)*,* U1(*t₃*)*,* U1(*t₄*), U1(*t₅*) und U1(*t₆*) repräsentieren somit Unkraut-Verteilungskarten in Bezug auf Unkraut U1. In analoger Weise repräsentieren die Felder U2(*t₁*)*,* U2(*t₂*)*,* U2(*t₃*)*,* U2(*t₄*), U2(*t₅*) und U2(*t₆*) Unkraut-Verteilungskarten in Bezug auf Unkraut U2. Die Verteilungen der Unkräuter 1 und 2 hätten auch in einer einzigen Verteilungskarte zusammengefasst werden können, sie sind hier jedoch separat dargestellt.

Zum Zeitpunkt *t₁* wurde im Feld ein Unkraut U1 identifiziert; das Unkraut U1 lag in Form eines kreisförmigen Bereichs (=Teilfläche) vor (siehe U1(*t₁*))*.*

Zum selben Zeitpunkt *t₁* lag in dem Feld kein Unkraut U2 vor (siehe U2(*t₁*)).

Aus den Unkraut-Verteilungskarten U1(*t₁*) und U2(*t₁*) wurde eine Applikationskarte A(*t₁*) erstellt. Da nur das Unkraut U1 auf dem Feld detektiert worden ist, enthält die Applikationskarte A(*t₁*) auch nur Informationen und Anweisungen in Bezug auf das Unkraut U1. In der Applikationskarte A(*t₁*) ist ein kreisförmiger Bereich mit einer Schraffur markiert, bei dem in U1(*t₁*) das Unkraut U1 detektiert worden ist. In diesem Bereich soll das Herbizid H1 appliziert werden. Die Ziffer 3 über dem schraffierten Bereich gibt an, dass diese Teilfläche insgesamt dreimal (N=3) mit dem Herbizid H1 behandelt werden soll.

Zu einem späteren Zeitpunkt nach der Applikation des Herbizids H1 ist in U1(*t₂*) zu erkennen, dass das Unkraut U1 offensichtlich nicht mehr in dem vorherigen kreisförmigen Bereich aufzufinden ist; offensichtlich war die Applikation des Herbizids H1 erfolgreich. Stattdessen hat sich jedoch ein sichelförmiger Bereich neben dem vorangegangenen kreisförmigen Bereich herausgebildet, in dem Unkraut U1 detektiert worden ist. Das Unkraut U1 hat sich in dem Feld also nach rechts verlagert.

Zusätzlich ist ein Unkraut U2 aufgetreten (siehe U2(*t₂*))*.* Aus diesen Befunden ergibt sich die Applikationskarte A(*t₂*). Zunächst einmal ist in A(*t₂*) dargestellt, dass das Herbizid H1 weiterhin in dem kreisförmigen Bereich appliziert werden soll, bei dem in U1(*t₁*) das Unkraut U1 detektiert worden ist, auch wenn es in U1(*t₂*) nicht mehr detektiert worden ist. Dies ist genau der Kern der vorliegenden Erfindung: die Applikationskarte A(*t₁*) wird mehrfach angewendet/abgearbeitet. Die Ziffer 2 über dem schraffierten Bereich gibt an, dass diese Teilfläche noch zweimal (*N*=3-1=2) mit dem Herbizid H1 behandelt werden soll.

Die Applikationskarte A(*t₁*) ist anhand der Befunde in U1(*t₂*) und U2(*t₂*) zu A(*t₂*) erweitert worden. Da nun ein sichelförmiger Bereich an Unkraut U1 in U1(*t₂*) detektiert worden ist, wurde der schraffierte Bereich in A(*t₂*) entsprechend erweitert. Die Ziffer 3 über dem erweiterten schraffierten Bereich gibt an, dass dieser erweiterte Bereich insgesamt dreimal (*N*=3) mit dem Herbizid H1 behandelt werden soll.

Zusätzlich ist in A(*t₂*) angegeben, dass Herbizid H2 in dem Bereich (gewellter Bereich) appliziert werden soll, in dem in U2(*t₂*) Unkraut U2 detektiert worden ist. Die Ziffer 4 unterhalb des gewellten Bereichs gibt an, dass diese Teilfläche insgesamt viermal (*N*=4) mit dem Herbizid H2 behandelt werden soll.

In U1(*t₃*) ist gezeigt, dass sich der Bereich mit Unkraut U1 weiter nach rechts verlagert hat. In U2(*t₃*) ist das Unkraut U2 völlig verschwunden. A(*t₃*) repräsentiert die zu U1(*t₃*) und U2(*t₃*) zugehörige Applikationskarte. Im kreisförmigen Bereich von A(*t₁*) soll auch gemäß A(*t₃*) weiterhin Herbizid H1 appliziert, und zwar noch einmal (*N*=1). Auch in dem sichelförmigen Bereich, der in A(*t₂*) zum kreisförmigen Bereich hinzugekommen ist, soll weiterhin Herbizid H1 appliziert werden, und zwar noch zweimal (*N*=2). Zusätzlich soll in dem Bereich Herbizid H1 appliziert, der in U1(*t₃*) neu aufgetreten ist, und zwar insgesamt dreimal (*N*=3).

Gemäß A(*t₃*) soll auch Herbizid H2 ein weiteres Mal appliziert werden, und zwar im selben Bereich wie bei A(*t₂*). Es sind in U2(*t₃*) keine neuen Bereiche mit Unkraut U2 hinzugekommen.

In U1(*t₄*) ist dargestellt, dass nach der Applikation gemäß A(*t₃*) kein Unkraut U1 mehr auf dem Feld detektiert worden ist. In U2(*t₄*) ist dargestellt, dass nach der Applikation gemäß A(*t₃*) kein Unkraut U2 mehr auf dem Feld detektiert worden ist. Dennoch werden gemäß A(*t₄*) die Herbizide H1 und H2 appliziert. In dem kreisförmigen Bereich aus A(*t₁*) wird in A(*t₄*) erstmalig kein Herbizid H1 mehr appliziert (*N*=0). In diesem Bereich wurde dreimal Herbizid H1 appliziert - diese Applikationsanzahl ist ausreichend, um das Nest dauerhaft zu beseitigen.

In den sichelförmigen Bereichen, die in A(*t₂*) und A(*t₃*) zum kreisförmigen Bereich hinzugekommen sind, soll ein weiteres Mal appliziert werden; im Fall des zuerst aufgetretenen sichelförmigen Bereichs (siehe U1(*t₂*)) noch einmal (*N*=1), im Fall des danach aufgetretenen sichelförmigen Bereichs (siehe U1(*t₃*)) noch zweimal (*N*=2).

Der Bereich aus U2(*t₂*) wird in A(*t₄*) soll noch zweimal (*N*=2) mit Herbizid H2 behandelt werden.

In U1(*t₅*) und U2(*t₅*) ist weiterhin kein Unkraut mehr detektiert worden. Es soll dennoch weiterhin gemäß A(*t₅*) Herbizid H1 und Herbizid H2 appliziert werden: ein letztes Mal (*N*=1) in dem Bereich von U1(*t₃*) mit Herbizid H1 und ein letztes (*N*=1) Mal in dem Bereich von U2(*t₂*) mit Herbizid H2.

U1(*t₆*) und U2(*t₃*) zeigen an, dass weiterhin kein Unkraut mehr detektiert worden ist. Gemäß A(*t₆*) ist keine Applikation eines Herbizids notwendig.

Es sei noch angemerkt, dass in diesem Beispiel nicht explizit auf die Schadschwellen von Unkraut U1 und Unkraut U2 eingegangen wurde. In diesem Beispiel könnte beispielsweise davon ausgegangen werden, dass immer dann, wenn in dem Feld Unkraut U1 oder Unkraut U2 detektiert worden ist, die Schadschwellen überschritten gewesen sind.

## Patentansprüche

1. Verfahren zur Bekämpfung von Schadorganismen auf einem Feld, auf dem Kulturpflanzen angebaut werden, das durch die folgenden Schritte gekennzeichnet ist:
(A) Erzeugen einer digitalen Schadorganismen-Verteilungskarte, auf der Teilflächen auf dem Feld verzeichnet sind, in denen die Schadorganismen direkt oder indirekt detektiert worden sind;
(B) Erzeugen einer digitalen Applikationskarte auf Basis der digitalen Schadorganismen - Verteilungskarte, wobei auf der digitalen Applikationskarte diejenigen Teilflächen des Feldes verzeichnet sind, auf denen eines oder mehrere Bekämpfungsmittel gegen die Schadorganismen appliziert werden sollen, wobei für jede dieser Teilflächen eine Zahl *N* von Behandlungen mit einem oder mehreren Bekämpfungsmitteln verzeichnet wird, wobei *N* größer als 1 ist;
(C) Applizieren eines oder mehrerer Bekämpfungsmittel gegen die Schadorganismen gemäß der digitalen Applikationskarte aus Schritt (B), wobei die Zahl *N* für die behandelten Teilflächen um 1 vermindert wird;
(D) Wiederholen des Schrittes (C) für jede Teilfläche bis N den Wert Null erreicht hat, wobei Bekämpfungsmittel unterschiedlicher Mode of Action verwendet werden und der Mode of Action bzw. die Kombination von Bekämpfungsmitteln von Applikation zu Applikation variiert wird.

2. Verfahren nach Anspruch 1, wobei in die digitale Applikationskarte diejenigen Teilflächen des Feldes aufgenommen werden, bei denen in Schritt (A) Schadorganismen direkt oder indirekt detektiert worden sind, und bei denen eine Schadschwelle erreicht oder überschritten ist.

3. Verfahren nach Anspruch 1, wobei in die digitale Applikationskarte in Schritt (B) diejenigen Teilflächen des Feldes aufgenommen werden, bei denen in Schritt (A) Nester mit Schadorganismen detektiert worden sind, die nach einer Applikation eines oder mehrerer Bekämpfungsmittel erhalten geblieben sind.

4. Verfahren nach Anspruch einem der Ansprüche 1 bis 3, wobei es sich bei den Schadorganismen um Unkräuter und/oder Ungräser handelt und es sich bei dem einen oder mehreren Bekämpfungsmitteln um ein oder mehrere Herbizide handelt.

5. Verfahren nach Anspruch einem der Ansprüche 1 bis 3, wobei es sich bei den Schadorganismen um tierische Schädlinge, vorzugsweise um Nematoden oder Kohlschotenmücken, und bei dem einen oder den mehreren Bekämpfungsmittel(n) um Pestizide gegen tierische Schädlinge handelt.

6. Verfahren nach einem der Ansprüche 1 bis 5, wobei die Zahl *N* bei der Erzeugung der digitalen Applikationskarte auf zwei, drei oder vier gesetzt wird.

7. Verfahren nach einem der Ansprüche 1 bis 6, **dadurch gekennzeichnet, dass** nach einer erfolgten Applikation eines oder mehrerer Bekämpfungsmittel auf den betroffenen Teilflächen erneut eine digitale Schadorganismen-Verteilungskarte gemäß Schritt (A) erzeugt wird, und in Schritt (B) in der bestehenden digitalen Applikationskarte diejenigen Bereiche ergänzt werden, in denen in der neuen digitalen Schadorganismen-Verteilungskarte Schadorganismen aufgefunden wurden, wobei die Teilflächen, bei denen *N* den Wert Null noch nicht erreicht hat, bestehen bleiben, und Teilflächen, bei denen *N* den Wert Null erreicht hat, gelöscht werden.

8. Verfahren nach einem der Ansprüche 1 bis 7, **dadurch gekennzeichnet, dass** begleitend zur Bekämpfung der Schadorganismen mit einem Bekämpfungsmittel eine physikalische Bekämpfung erfolgt oder dass zumindest in einem Teil der Bereiche des Feldes, in denen zwar Schadorganismen detektiert worden sind, in denen aber keine Schadschwelle überschritten worden ist, eine physikalische Bekämpfung der Schadorganismen erfolgt.

9. Verwendung einer digitalen Applikationskarte, zur Applikation eines oder mehrerer Bekämpfungsmittel gegen Schadorganismen, wobei auf der digitalen Applikationskarte Teilflächen eines Feldes für Kulturpflanzen verzeichnet sind, die mit einem oder mehreren Bekämpfungsmitteln gegen Schadorganismen behandelt werden sollen, wobei für jede dieser Teilflächen eine ganze Zahl *N* verzeichnet ist, die angibt, wie viele Male die Teilfläche mit einem oder mehreren Bekämpfungsmitteln für die Schadorganismen behandelt werden soll, wobei *N* größer als 1 ist, **dadurch gekennzeichnet, dass** die zu behandelnden Teilflächen *N*-mal mit einem oder mehreren Bekämpfungsmitteln behandelt werden, wobei die Zahl *N* nach einer erfolgten Behandlung der Teilfläche um eins vermindert wird und wobei Bekämpfungsmittel unterschiedlicher Mode of Action verwendet werden und der Mode of Action bzw. die Kombination von Bekämpfungsmitteln von Applikation zu Applikation variiert wird.

10. Verwendung einer Digitalen Applikationskarte nach Anspruch 9, wobei auf der Applikationskarte diejenigen Teilflächen verzeichnet sind, bei denen ein Schadorganismus eine Schadschwelle erreicht oder überschritten hat

11. Verwendung einer Digitalen Applikationskarte nach einem der Ansprüche 9 oder 10, wobei es sich bei den Schadorganismen um Unkräuter und/oder Ungräser handelt und es sich bei dem einen oder mehreren Bekämpfungsmitteln um ein oder mehrere Herbizide handelt.

12. Verwendung einer Digitalen Applikationskarte nach einem der Ansprüche 9 oder 10, wobei es sich bei den Schadorganismen um tierische Schädlinge, vorzugsweise um Nematoden oder Kohlschotenmücken und bei dem einen oder mehreren Bekämpfungsmitteln um Pestizide gegen tierische Schädlinge handelt.

13. Verwendung einer Digitalen Applikationskarte nach einem der Ansprüche 9 oder 10, wobei es sich bei den Schadorganismen um Pilze, vorzugsweise um Septoria, und bei dem einen oder mehreren Bekämpfungsmitteln um Fungizide handelt.

14. Verwendung einer Digitalen Applikationskarte nach einem der Ansprüche 9 bis 13, in der mit einem oder mehreren Bekämpfungsmitteln *N*-fach zu behandelnde Teilflächen zu einem Zeitpunkt aufgenommen worden sind, zu dem mindestens eine der in der digitalen Applikationskarte bereits bestehenden Teilflächen mindestens einmal mit einem oder mehreren Bekämpfungsmitteln behandelt worden ist.

15. System zur Bekämpfung von Schadorganismen umfassend:
(a) eine digitale Applikationskarte, auf der diejenigen Teilflächen eines Feldes verzeichnet sind, die mit einem oder mehreren Bekämpfungsmitteln für die Schadorganismen behandelt werden sollen;
(b) ein Positionsbestimmungssystem;
(c) eine Applikations-Vorrichtung, umfassend
- mindestens einen Behälter zur Aufnahme mindestens eines Bekämpfungsmittels gegen die Schadorganismen,
- eine Sprühvorrichtung zum Applizieren des mindestens einen Bekämpfungsmittels, und
- eine Steuereinheit, umfassend einen Arbeitsspeicher zum Einlesen der digitalen Applikationskarte, Mittel zur Kommunikation mit dem Positionsbestimmungssystem und Mittel zur Steuerung der Sprühvorrichtung,
**dadurch gekennzeichnet, dass** auf der digitalen Applikationskarte für jede der Teilflächen eine Zahl *N* verzeichnet ist, die angibt, wie viele Male eine Behandlung der Teilfläche mit dem Bekämpfungsmittel erfolgen soll, wobei *N* größer als 1 ist, und wobei die Steuereinheit so ausgestattet ist, dass die Zahl *N* nach einer erfolgten Behandlung um eins vermindert wird und **dadurch gekennzeichnet, dass** die Steuereinheit die Applikation mindestens eines Bekämpfungsmittels mittels der Sprühvorrichtung startet, wenn das Positionsbestimmungssystem signalisiert, dass sich die Applikations-Vorrichtung an einem Ort befindet, an dem gemäß der digitalen Applikationskarte die Applikation des mindestens einen Bekämpfungsmittels vorgesehen ist, wobei Bekämpfungsmittel unterschiedlicher Mode of Action verwendet werden und der Mode of Action bzw. die Kombination von Bekämpfungsmitteln von Applikation zu Applikation variiert wird.

16. System nach Anspruch 15, wobei es sich bei den Schadorganismen um Unkräuter und/oder Ungräser handelt und es sich bei dem einen oder mehreren Bekämpfungsmitteln um ein oder mehrere Herbizide handelt.

## Claims

1. A method for controlling harmful organisms on a field on which cultivated plants are cultivated, which method has the following steps:
(A) generating a digital harmful-organisms distribution map, registered on which are subareas on the field in which the harmful organisms have been detected directly or indirectly;
(B) generating a digital application map on the basis of the digital harmful-organisms distribution map, it being registered on the digital application map those subareas of the field on which one or more control agents against the harmful organisms are to be applied, it being registered for each of said subareas a number *N* of treatments with one or more control agents, where *N* is greater than 1;
(C) applying one or more control agents against the harmful organisms as per the digital application map from step (B), the number *N* for the treated subareas being reduced by 1;
(D) repeating step (C) for each subarea until N has reached the value zero, control agents of different modes of action being used and the mode of action and/or the combination of control agents being varied from application to application.

2. The method according to claim 1, wherein those subareas of the field in which harmful organisms have been detected directly or indirectly in step (A) and in which an economic threshold has been reached or exceeded are incorporated into the digital application map.

3. The method according to claim 1, wherein those subareas of the field in which nests of harmful organisms have been detected in step (A), which nests have survived after an application of one or more control agents, are incorporated into the digital application map in step (B).

4. The method according to claim any of claims 1 to 3, wherein the harmful organisms are broad-leaved weeds and/or grass weeds and the one or more control agents are one or more herbicides.

5. The method according to claim any of claims 1 to 3, wherein the harmful organisms are animal pests, preferably nematodes or brassica pod midges, and the one or more control agents are pesticides against animal pests.

6. The method according to any of claims 1 to 5, wherein the number *N* in the generation of the digital application map is set to two, three or four.

7. The method according to any of claims 1 to 6, wherein a digital harmful-organisms distribution map is generated again as per step (A) after an effected application of one or more control agents to the subareas concerned, and additions are made in step (B) in the existing digital application map of those regions in which harmful organisms have been detected in the new digital harmful-organisms distribution map, the subareas in which *N* has not yet reached the value zero remaining in force and subareas in which *N* has reached the value zero being deleted.

8. The method according to any of claims 1 to 7, wherein the control of the harmful organisms with a control agent is accompanied by a physical control or wherein a physical control of the harmful organisms takes place at least in part of the regions of the field in which harmful organisms have been detected, but in which no economic threshold has been exceeded.

9. The use of a digital application map for the application of one or more control agents against harmful organisms, it being registered on the digital application map subareas of a field for cultivated plants that are to be treated with one or more control agents against harmful organisms, it being registered for each of said subareas an integer *N* which specifies how many times the subarea is to be treated with one or more control agents for the harmful organisms, where *N* is greater than 1, wherein the subareas to be treated are treated *N* times with one or more control agents, the number *N* being reduced by 1 after an effected treatment of the subarea, and control agents of different modes of action being used and the mode of action and/or the combination of control agents being varied from application to application.

10. The use of a digital application map according to claim 9, wherein it is registered on the application map those subareas in which a harmful organism has reached or exceeded an economic threshold.

11. The use of a digital application map according to either of claims 9 and 10, wherein the harmful organisms are broad-leaved weeds and/or grass weeds and the one or more control agents are one or more herbicides.

12. The use of a digital application map according to either of claims 9 and 10, wherein the harmful organisms are animal pests, preferably nematodes or brassica pod midges, and the one or more control agents are pesticides against animal pests.

13. The use of a digital application map according to either of claims 9 and 10, wherein the harmful organisms are fungi, preferably Septoria, and the one or more control agents are fungicides.

14. The use of a digital application map according to any of claims 9 to 13, in which subareas to be treated N times with one or more control agents have been incorporated at a point in time at which at least one of the subareas already existing in the digital application map has been treated at least once with one or more control agents.

15. A system for controlling harmful organisms, comprising:
(a) a digital application map, registered on which are those subareas of a field which are to be treated with one or more control agents for the harmful organisms;
(b) a position determination system;
(c) an application device comprising
- at least one container for accommodating at least one control agent against the harmful organisms,
- a spray device for applying the at least one control agent, and
- a control unit comprising a working memory for reading in the digital application map, means for communicating with the position determination system and means for controlling the spray device,
wherein a number *N* is registered on the digital application map for each of the subareas, which number specifies how many times a treatment of the subarea with the control agent is to take place, *N* being greater than 1, and the control unit being equipped in such a way that the number *N* is reduced by one after a treatment has taken place, and wherein the control unit starts the application of at least one control agent by means of the spray device when the position determination system signals that the application device is situated at a site at which the application of the at least one control agent is envisaged according to the digital application map, control agents of different modes of action being used and the mode of action and/or the combination of control agents being varied from application to application.

16. The system according to claim 15, wherein the harmful organisms are broad-leaved weeds and/or grass weeds and the one or more control agents are one or more herbicides.

## Revendications

1. Procédé de lutte contre des organismes nuisibles dans un champ dans lequel sont cultivées des plantes de culture, **caractérisé par** les étapes suivantes :
(A) la création d'une carte numérique de répartition des organismes nuisibles, sur laquelle sont indiquées les surfaces partielles du champ dans lesquelles les organismes nuisibles ont été détectés directement ou indirectement ;
(B) la création d'une carte numérique d'application sur la base de la carte numérique de répartition des organismes nuisibles, la carte numérique d'application indiquant les surfaces partielles du champ sur lesquelles un ou plusieurs agents de lutte contre les organismes nuisibles doivent être appliqués, un nombre *N* de traitements avec un ou plusieurs agents de lutte étant indiqué pour chacune de ces surfaces partielles, *N* étant supérieur à 1 ;
(C) l'application d'un ou plusieurs agents de lutte contre les organismes nuisibles conformément à' la numérique carte d'application de l'étape (B), le nombre *N* étant diminué de 1 pour les surfaces partielles traitées ;
(D) la répétition de l'étape (C) pour chaque surface partielle jusqu'à ce que N atteigne la valeur zéro, des agents de lutte de différents modes d'action étant utilisés et le mode d'action ou la combinaison d'agents de lutte étant varié d'une application à l'autre.

2. Procédé selon la revendication 1, dans lequel les surfaces partielles du champ pour lesquelles des organismes nuisibles ont été détectés directement ou indirectement à l'étape (A) et pour lesquelles un seuil de nuisance est atteint ou dépassé sont enregistrées dans la carte numérique d'application.

3. Procédé selon la revendication 1, dans lequel les surfaces partielles du champ pour lesquelles des nids avec des organismes nuisibles ont été détectés à l'étape (A), qui ont été conservés après une application d'un ou de plusieurs agents de lutte, sont enregistrées dans la carte numérique d'application à l'étape (B).

4. Procédé selon la revendication l'une quelconque des revendications 1 à 3, dans lequel les organismes nuisibles consistent en des mauvaises herbes et/ou des graminées et les un ou plusieurs agents de lutte consistent en un ou plusieurs herbicides.

5. Procédé selon la revendication l'une quelconque des revendications 1 à 3, dans lequel les organismes nuisibles consistent en des ravageurs animaux, de préférence des nématodes ou des mouches de la tige du chou, et les un ou plusieurs agents de lutte consistent en des pesticides contre les ravageurs animaux.

6. Procédé selon l'une quelconque des revendications 1 à 5, dans lequel le nombre *N* est fixé à deux, trois ou quatre lors de la création de la carte numérique d'application.

7. Procédé selon l'une quelconque des revendications 1 à 6, **caractérisé en ce qu'**après une application effectuée d'un ou de plusieurs agents de lutte sur les surfaces partielles concernées, une carte numérique de répartition des organismes nuisibles est à nouveau créée selon l'étape (A), et à l'étape (B), les zones dans lesquelles des organismes nuisibles ont été trouvés dans la nouvelle carte numérique de répartition des organismes nuisibles sont complétées dans la carte numérique d'application existante, les surfaces partielles pour lesquelles *N* n'a pas encore atteint la valeur zéro restant en place, et les surfaces partielles pour lesquelles *N* a atteint la valeur zéro étant effacées.

8. Procédé selon l'une quelconque des revendications 1 à 7, **caractérisé en ce que**, parallèlement à la lutte contre les organismes nuisibles avec un agent de lutte, une lutte physique est effectuée ou **en ce qu'**une lutte physique contre les organismes nuisibles est effectuée au moins dans une partie des zones du champ dans lesquelles des organismes nuisibles ont été détectés, mais dans lesquelles aucun seuil de nuisance n'a été dépassé.

9. Utilisation d'une carte numérique d'application pour l'application d'un ou de plusieurs agents de lutte contre les organismes nuisibles, la carte numérique d'application indiquant des surfaces partielles d'un champ de plantes cultivées qui doivent être traitées avec un ou plusieurs agents de lutte contre les organismes nuisibles, un nombre entier *N* étant indiqué pour chacune de ces surfaces partielles, lequel indique combien de fois la surface partielle doit être traitée avec un ou plusieurs agents de lutte contre les organismes nuisibles, *N* étant supérieur à 1, **caractérisée en ce que** les surfaces partielles à traiter sont traitées *N* fois avec un ou plusieurs agents de lutte, le nombre *N* tant diminué de un après un traitement effectué de la surface partielle, et des agents de lutte de différents modes d'action étant utilisés, et le mode d'action ou la combinaison d'agents de lutte étant varié d'une application à l'autre.

10. Utilisation d'une carte numérique d'application selon la revendication 9, dans laquelle sont indiquées sur la carte d'application les surfaces partielles dans lesquelles un organisme nuisible a atteint ou dépassé un seuil de nuisance.

11. Utilisation d'une carte numérique d'application selon l'une quelconque des revendications 9 ou 10, dans laquelle les organismes nuisibles consistent en des mauvaises herbes et/ou des graminées et les un ou plusieurs agents de lutte consistent en un ou plusieurs herbicides.

12. Utilisation d'une carte numérique d'application selon l'une quelconque des revendications 9 ou 10, dans laquelle les organismes nuisibles consistent en des ravageurs animaux, de préférence des nématodes ou des mouches de la tige du chou, et les un ou plusieurs agents de lutte consistent en des pesticides contre les ravageurs animaux.

13. Utilisation d'une carte numérique d'application selon l'une quelconque des revendications 9 ou 10, dans laquelle les organismes nuisibles consistent en des champignons, de préférence la septoriose, et les un ou plusieurs agents de lutte consistent en des fongicides.

14. Utilisation d'une carte numérique d'application selon l'une quelconque des revendications 9 à 13, dans laquelle des surfaces partielles à traiter N fois avec un ou plusieurs agents de lutte ont été enregistrées à un moment où au moins une des surfaces partielles déjà existantes dans la carte numérique d'application a été traitée au moins une fois avec un ou plusieurs agents de lutte.

15. Système de lutte contre des organismes nuisibles comprenant :
(a) une carte numérique d'application indiquant les surfaces partielles d'un champ qui doivent être traitées avec un ou plusieurs agents de lutte contre les organismes nuisibles ;
(b) un système de détermination de la position ;
(c) un dispositif d'application comprenant
- au moins un récipient destiné à contenir au moins un agent de lutte contre les organismes nuisibles,
- un dispositif de pulvérisation pour appliquer l'au moins un agent de lutte, et
- une unité de commande comprenant une mémoire de travail pour la lecture de la carte numérique d'application, des moyens de communication avec le système de détermination de la position et des moyens de commande du dispositif de pulvérisation,
**caractérisé en ce que**, sur la carte numérique d'application, pour chacune des surfaces partielles, un nombre *N* est enregistré, qui indique combien de fois un traitement de la surface partielle avec l'agent de lutte doit être effectué, *N* étant supérieur à 1, et l'unité de commande étant conçue de telle sorte que le nombre *N* est diminué de un après un traitement effectué, et **caractérisé en ce que** l'unité de commande démarre l'application d'au moins un agent de lutte au moyen du dispositif de pulvérisation lorsque le système de détermination de la position signale que le dispositif d'application se trouve à un endroit où, conformément à la carte numérique d'application, l'application de l'au moins un agent de lutte est prévue, des agents de lutte de différents modes d'action étant utilisés et le mode d'action ou la combinaison d'agents de lutte étant varié d'une application à l'autre.

16. Système selon la revendication 15, dans lequel les organismes nuisibles consistent en des mauvaises herbes et/ou des graminées et les un ou plusieurs agents de lutte consistent en un ou plusieurs herbicides.
